# EUROPEAN PATENT SPECIFICATION

(11) **EP 4 082 825 B1**
(45) Date of publication and mention of the grant of the patent: **30.07.2025**
(21) Application number: 22170230.1
(22) Date of filing: 27.04.2022
(51) Int. Cl.: B60L 58/40, B64D 27/24, H01M 16/00

(54) **FLYING OBJECT**
FLUGKÖRPER
OBJET VOLANT

(30) Priority: 28.04.2021 JP 2021076676; 25.04.2022 JP 2022071561
(43) Date of publication of application: 02.11.2022
(73) Proprietor: TOYOTA JIDOSHA KABUSHIKI KAISHA, Toyota-shi, Aichi-ken, 471-8571 (JP)
(72) Inventor: KANEKO, Tomohiko, Toyota-shi,, 471-8571 (JP)
(74) Representative: J A Kemp LLP

(56) References cited:
- US-A1- 2011 071 707
- US-B2- 9 604 533

## Description

### FIELD

This application relates to a flying object.

### BACKGROUND

Recently, development of an aircraft with a fuel cell system has been promoted. For example, Patent Document 1 describes a power supply system including a battery and a fuel cell for an aircraft.

US 2011/071707 discloses a flying object according to the pre-characterising section of claim 1.

US 9,604,533 discloses a vehicle with an electrical power storage device.

### CITATION LIST

Patent Literature 1: JP 2007-15423 A

### SUMMARY

### Technical Problem

In a flying object including a fuel cell and a secondary battery, when an excess power generated for the purpose of high potential avoidance, refreshing operation, rapid warm-up of the fuel cell, or the like is charged in the secondary battery, there is a problem that ignition due to overcharging occurs. Such problems are important issues and related to safety.

In view of the above circumstances, it is a main object of the present application to provide a flying object capable of suppressing ignition of a secondary battery due to overcharging.

### Solution to Problem

The present disclosure provides, as one means for solving the above problems, a flying object. The flying object includes a fuel cell, a secondary battery, a motor, an air resistance increasing device, and a control unit. The motor drives a propulsion propeller. The air resistance increasing device is capable of increasing the air resistance. The fuel cell, the secondary battery, and the motor are electrically connected. The motor is driven by obtaining power from at least one of the fuel cell and the secondary battery. The secondary battery stores electric power generated by the fuel cell. When the fuel cell generates an amount of power exceeding a power consumption amount, the control unit increases an amount of power supplied to the motor from the fuel cell while increasing the air resistance by operating the air resistance increasing device, and performs a power consumption control to maintain a flight state. When the fuel cell generates an amount of power exceeding the power consumption amount and a part of the amount of power exceeding the power consumption amount is defined as an excess power amount, the control unit may perform the power consumption control when the excess power amount exceeds a first threshold value and may stop the power consumption control when the excess power amount falls below a second threshold value. Wherein the first threshold value is in a range of 40% to 60% of an allowable charge amount; and the second threshold value is in a range of 10% to 20% of the allowable charge amount. The allowable charge amount is an amount of charge within a range that does not cause overcharge of the second battery.

In the above-described flying object, the air resistance increasing device may include spoilers, flaps or tabs which is constituted by a pair of flat plates and the air resistance may be increased by opening both flat plates during the power consumption control Effect

The flying object of the present disclosure performs a predetermined power consumption control when the fuel cell generates an amount of power exceeding the power consumption amount, that is, when the excess power amount is generated. This allows the excess power to be consumed, thus making it possible to suppress the ignition of the secondary battery due to overcharging.

### BRIEF DESCRIPTION OF DRAWINGS

FIG. 1 is a schematic diagram of a flying object 10. FIG. 1A is a front view of the flying object 10, and FIG. 1B is a top view of the flying object 10.
FIG. 2 is a schematic diagram of a voltage system of the flying object 10.
FIG. 3 is a diagram for describing a power consumption control with set threshold values.
FIG. 4 is an example of a processing routine of the power consumption control with the set threshold values.

### DESCRIPTION OF EMBODIMENTS

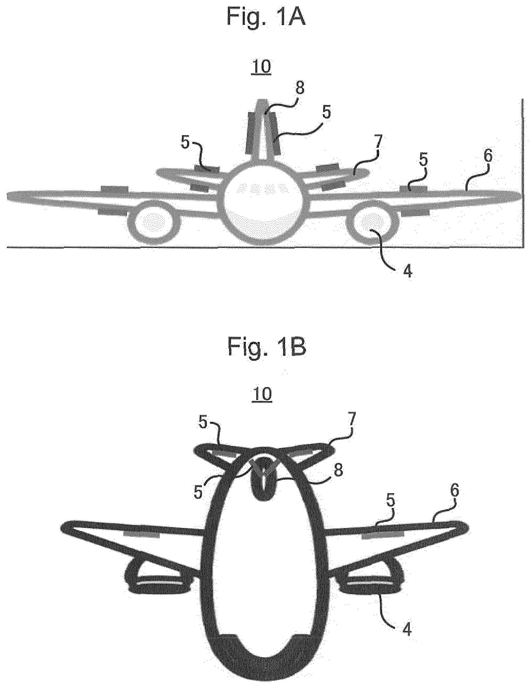

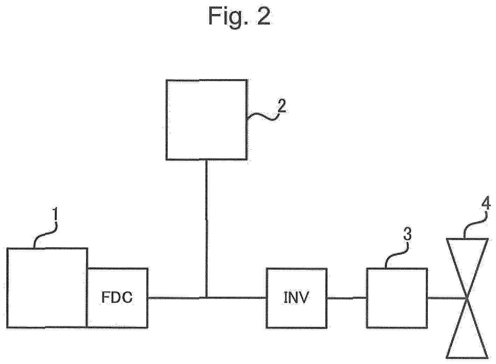

A flying object of the present disclosure will be described using a flying object 10 as an embodiment. FIG. 1 shows a schematic view of the flying object 10. FIG. 1A is a front view of the flying object 10, and FIG. 1B is a top view of the flying object 10. FIG. 2 is a schematic diagram of a voltage system of the flying object 10.

The flying object 10 is not particularly limited as long as it is an object capable of flying in air. For example, the flying object 10 includes a typical airplane and an airplane, such as, a light aircraft and a drone. FIG. 1 shows the flying object 10 in an embodiment of an airplane.

The flying object 10 includes a fuel cell 1, a secondary battery 2, a motor 3 that drives a propulsion propeller 4, an air resistance increasing device capable of increasing air resistance, and a control unit. Further, as shown in FIG. 2, the fuel cell 1, the secondary battery 2, and the motor 3 are electrically connected, the motor 3 is intended to drive by obtaining power from at least one of the fuel cell 1 and the secondary battery 2. Incidentally, FIG. 2 shows a fuel-cell DC/DC converter (FDC) and an inverter (INV) together, which are common.

The fuel cell 1 is formed by laminating a plurality of fuel cell single cells (sometimes simply referred to as "single cell") in series. The single cell includes an electrolyte membrane, an anode disposed on one side of the electrolyte membrane, and a cathode disposed on the other side of the electrolyte membrane. Specifically, catalyst layers are disposed on both surfaces of the electrolyte membrane, diffusion layers are disposed outside the catalyst layers, and separators are further disposed outside the diffusion layers. The separator is provided with a fuel gas channel and an oxidant gas channel. This is a general configuration of a fuel cell. Here, in the fuel cell, the catalyst layer and the diffusion layer function as an anode or a cathode.

There is no particular limitation on the electrolyte membrane, the catalyst layer, the diffusion layer, or the separator disposed in the fuel cell, and any known one may be used. For example, an ion exchange membrane made of a solid polymer material may be employed as an electrolyte membrane. Examples of the catalyst layer include a platinum-based catalyst. Examples of the diffusion layer include a porous material such as a carbon material. Examples of the separator include a metal material, such as a stainless steel, and a carbon material, such as a carbon composite material.

In the fuel cell 1, a fuel gas is supplied to the anode, and an oxidant gas is supplied to the cathode, whereby an electrochemical reaction occurs and power is generated. The generated power is used for charging the secondary battery 2 and driving the motor 3. It may also be used in another device of the flying object 10.

The secondary battery 2 is a known secondary battery, such as a lithium ion secondary battery. The secondary battery 2 plays a role in driving the motor 3 and storing electric power generated by the fuel cell 1. It may also be used in another device of the flying object 10.

The air resistance increasing device is not particularly limited as long as it is a flight control surface capable of increasing the air resistance of the flying object 10. For example, the air resistance increasing device may a secondary control surface 5. The secondary control surface is an auxiliary control surface other than the primary control surface of the flight control surface. Examples of the secondary control surface 5 include spoilers, flaps, tabs, and the like. FIG. 1 shows an example in which a spoiler is used as the secondary control blade surface 5. In FIG. 1, the secondary control surface 5 is provided on each of a pair of main wings 6, a pair of horizontal stabilizers 7, and a vertical stabilizer 8. The secondary control surface 5 is constituted of a pair of flat plates, and usually controls the move of the flying object 10 by opening one or both flat plates to change the air resistance. As shown in FIG. 1, the secondary control surfaces 5 provided on the main wings 6 and the horizontal stabilizers 7 have vertically arranged flat plates, and the secondary control surfaces 5 provided on the vertical stabilizer 8 have flat plates arranged on the right and left. Such a configuration is similar to that of a general secondary control surface.

The control unit is a computer system including a CPU, a ROM, a RAM, an input/output interface, and the like, and controls each unit of the flying object 10.

As described above, the power generated by the fuel cell 1 may be used to charge the secondary battery 2. Normally, the power generation of the fuel cell 1 is controlled such that the secondary battery 2 does not exceed the charging allowable power. However, assume that the power is generated for high potential avoidance, refreshing operation, rapid warm-up, or the like of the fuel cell 1, and the power generation amount becomes a power amount exceeding the power consumption amount. When a portion of the power amount (excess power amount) that exceeds the power consumption amount is charged into the secondary battery 2, there is a case where the allowable charge amount is exceeded and overcharged. Then, there is a problem that ignition occurs when the secondary battery 2 is overcharged. The suppression of the ignition of such a secondary battery 2 is an important problem for enhancing the safety of the flying object 10.

Therefore, in the flying object 10, when the fuel cell 1 generates an amount of power exceeding the power consumption amount, the control unit increases the amount of power supplied from the fuel cell 1 to the motor 3 and operates the air resistance increasing device to increase the air resistance to maintain the flight state as a power consumption control. This consumes the excess power while maintaining the flight state, thus allowing the suppressed ignition of the secondary battery due to overcharging.

Here, each term will be described.

The "allowable charge amount" is an amount of charge within a range that does not cause overcharge. That is, when the amount of charge exceeds the allowable charge amount, the secondary battery 2 is overcharged.

The "power consumption amount" is a power consumption amount required for an operation of the flying object 10. The power consumption amount varies depending on states of operation of the flying object 10 and the like.

The "excess power amount" means a part of the power amount exceeding the power consumption amount when the fuel cell 1 generates power in excess of the power consumption amount.

The "high potential avoidance" is a power generation to avoid a voltage of the fuel cell 1 rising above a predetermined voltage. This is because when the voltage of the fuel cell 1 rises to a predetermined voltage, a metal (e.g., platinum) used in the catalyst layer is ionized and eluted.

The "refreshing operation" is a power generation for lowering the voltage of the fuel cell 1 for removing an oxide film of a metal (e.g., platinum) used in the catalyst layer.

The "rapid warm-up" is a power generation for self-heating in order to prevent freezing of the fuel cell 1.

The "power consumption control" is a control for consuming an excess power performed by the control unit. In the power consumption control, the thrust increase control for increasing an amount of power supplied from the fuel cell 1 to the motor 3 and the air resistance increase control for increasing an air resistance by operating the air resistance increasing device are performed. At this time, it is necessary to carry out the thrust increase control and the air resistance increase control so as to maintain the flight state. The "maintain the flight state" means that the thrust and the lift remain almost unchanged before and after the power consumption control. The "remain almost unchanged" means that the thrust and the lift change within ±10%, preferably within ±5%, before and after the power consumption control.

Therefore, it can be said that the power consumption control is a control to increase the thrust or the lift of the flying object 10 and increases the air resistance to consume the excess power for maintaining the flight state. Here, the order of performing the thrust increase control and the air resistance increase control is not particularly limited, they may be performed in order, or they may be simultaneously performed. If they are performed in order, either control may be performed first.

Although there is no particular limitation on the increase amount of the amount of power supplied to the motor 3, it may be a part or a total amount of the excess power. When the air resistance device includes the secondary control surfaces 5, the air resistance can be increased by opening one or both of the secondary control surfaces 5. Preferably, the secondary control surfaces 5 are both open. As shown in FIG. 1, when a plurality of secondary control surfaces 5 are provided in the flying object 10, all the secondary control surfaces 5 provided in the flying object 10 may be opened, or a part of the secondary control surfaces 5 may be opened. By using the secondary control surface 5 as an air resistance increasing device, the power consumption control can be performed without providing an additional device.

Further, the control unit performs the power consumption control as follows. That is, the control unit performs the power consumption control when the excess power amount exceeds a first threshold value, and may stop the power consumption control when the excess power amount falls below a second threshold value. This allows overcharging of the secondary battery to be suppressed while suppressing the number and time of the power consumption control, thus making it possible to improve the fuel consumption.

The "first threshold value" is appropriately set from a range of an allowable charge amount in which the overcharge of the secondary battery 2 can be suppressed by performing the power consumption control when the excess power occurs, considering the fuel consumption. The first threshold value is in a range of 40% to 60% of the allowable charge amount.

The "second threshold value" is appropriately set from the range of the allowable charge amount in which the overcharge of the secondary battery 2 can be suppressed without performing the power consumption control when the excess power occurs, considering the fuel consumption. The second threshold value is in a range of 10% to 20% of the allowable charge amount.

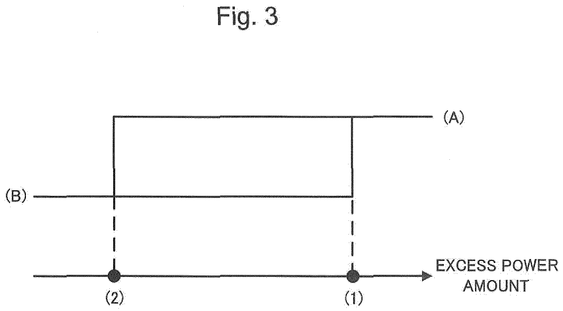

FIG. 3 shows a diagram illustrating the power consumption control in which the threshold values are set. (1) and (2) in FIG. 3 show the first threshold value and the second threshold value, respectively. In addition, (A) and (B) in FIG. 3 show the excess power amount during the power consumption control and the excess power amount when the power consumption control is stopped, respectively. As shown in FIG. 3, the power consumption control with the set threshold values is controlled to draw a hysteresis loop.

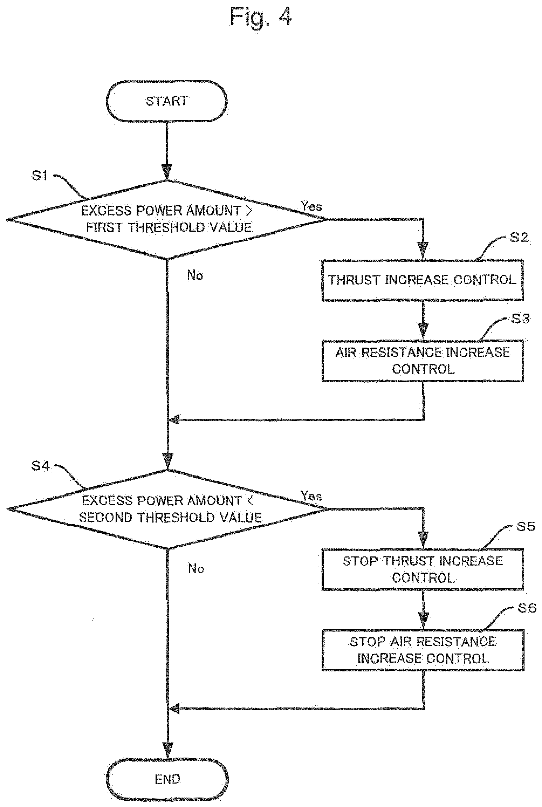

Further, FIG. 4 shows an example of the processing routine of the power consumption control with the set threshold values. As shown in FIG. 4, a control unit 50 includes processes S1 to S6, and the control unit 50 repeatedly performs these processes.

In the process S1 it is determined whether or not the excess power amount exceeds the first threshold value. If the excess power amount is determined to exceed the first threshold value, the power consumption control is performed (processes S2 and S3).

In the process S2, the thrust increase control for increasing the amount of power supplied from the fuel cell 1 to the motor 3 is performed. In the process S3, the air resistance increasing control is performed to increase the air resistance by operating the air resistance increasing device. Here, when both of the processes S2 and S3 are performed, the control is performed so as to maintain the flight state.

In the process S4, it is determined whether or not the excess power amount is lower than the second threshold value. If the excess power amount is below the second threshold value, the power consumption control is stopped (processes S5 and S6).

In the process S5, the thrust increase control is stopped. In the process S6, the air resistance increase control is stopped. Here, in performing both of the processes S5 and S6, it is preferred to control so as to maintain the flight state.

As described above, the flying object 10 as an embodiment of the flying object of the present disclosure has been described. The flying object of the present disclosure performs the predetermined power consumption control when the fuel cell generates an amount of power exceeding the power consumption amount, that is, when the excess power amount occurs. Therefore, the flying object of the present disclosure allows the excess power amount to be consumed while maintaining the flight state, thus making it possible to suppress the ignition of the secondary battery due to overcharging.

### Reference Signs List

1 Fuel cell
2 Secondary battery
3 Motor
4 Propeller
5 Secondary control surface
6 Main wing
7 Horizontal stabilizer
8 Vertical stabilizer
10 Flying object

## Claims

1. A flying object comprising:
a fuel cell (1);
a secondary battery (2);
a motor (3) that drives a propulsion propeller (4);
an air resistance increasing device (5) capable of increasing the air resistance; and
a control unit,
wherein the fuel cell (1), the secondary battery (2), and the motor (3) are electrically connected;
the motor (3) is driven by obtaining power from at least one of the fuel cell (1) and the secondary battery (2);
the secondary battery (2) stores electric power generated by the fuel cell (1); and
when the fuel cell (1) generates an amount of power exceeding a power consumption amount, the control unit increases an amount of power supplied to the motor (3) from the fuel cell (1), and performs a power consumption control to maintain a flight state,
wherein:
when the fuel cell (1) generates an amount of power exceeding a power consumption amount, the control unit increases an amount of power supplied to the motor (3) from the fuel cell (1) while increasing the air resistance by operating the air resistance increasing device (5), and performs a power consumption control to maintain a flight state,
and in that when the fuel cell (1) generates an amount of power exceeding the power consumption amount and a part of the amount of power exceeding the power consumption amount is defined as an excess power amount, the control unit performs the power consumption control when the excess power amount exceeds a first threshold value and stops the power consumption control when the excess power amount falls below a second threshold value,
**characterised in that**:
the first threshold value is in a range of 40% to 60% of an allowable charge amount;
the second threshold value is in a range of 10% to 20% of the allowable charge amount; and
the allowable charge amount is an amount of charge within a range that does not cause overcharge of the second battery (2).

2. The flying object according to claim 1, wherein
the air resistance increasing device (5) includes spoilers, flaps or tabs which is constituted by a pair of flat plates, and
the air resistance is increased by opening both flat plates during the power consumption control.

## Patentansprüche

1. Flugobjekt, umfassend:
eine Brennstoffzelle (1);
einen Akku (2);
einen Motor (3), der einen Antriebspropeller (4) antreibt;
eine Vorrichtung (5) für die Erhöhung des Luftwiderstands, die in der Lage ist, den Luftwiderstand zu erhöhen; und
eine Steuereinheit,
wobei die Brennstoffzelle (1), der Akku (2) und der Motor (3) elektrisch verbunden sind;
der Motor (3) angetrieben wird, indem er Leistung von wenigstens einem der Brennstoffzelle (1) und des Akkus (2) empfängt;
der Akku (2) die von der Brennstoffzelle (1) erzeugte elektrische Leistung speichert; und
wenn die Brennstoffzelle (1) eine Leistungsmenge erzeugt, die die Menge an Leistungsverbrauch übersteigt, die Steuereinheit eine Leistungsmenge, die dem Motor (3) von der Brennstoffzelle (1) zugeführt wird, erhöht und eine Leistungsverbrauchssteuerung durchführt, um einen Flugzustand aufrechtzuerhalten,
wobei:
wenn die Brennstoffzelle (1) eine Leistungsmenge erzeugt, die eine Menge an Leistungsverbrauch übersteigt, die Steuereinheit eine Leistungsmenge erhöht, die dem Motor (3) von der Brennstoffzelle (1) zugeführt wird, während der Luftwiderstand durch Betreiben der Vorrichtung (5) für die Erhöhung des Luftwiderstands erhöht wird, und eine Leistungsverbrauchssteuerung durchführt, um einen Flugzustand aufrechtzuerhalten,
und dadurch, dass, wenn die Brennstoffzelle (1) eine Leistungsmenge erzeugt, die die Menge an Leistungsverbrauch übersteigt, und ein Teil der Leistungsmenge, der die Menge an Leistungsverbrauch übersteigt, als eine Menge an Leistungsüberschuss definiert wird, die Steuereinheit die Leistungsverbrauchssteuerung durchführt, wenn die Menge an Leistungsüberschuss einen ersten Schwellenwert überschreitet und die Leistungsverbrauchssteuerung stoppt, wenn die Menge an Leistungsüberschuss unter einen zweiten Schwellenwert fällt,
**dadurch gekennzeichnet, dass**:
der erste Schwellenwert in einem Bereich von 40 % bis 60 % der erlaubten Ladungsmenge liegt;
der zweite Schwellenwert in einem Bereich von 10 % bis 20 % der erlaubten Ladungsmenge liegt; und
die erlaubte Ladungsmenge eine Ladungsmenge innerhalb eines Bereichs ist, der kein Überladen des Akkus (2) verursacht.

2. Flugobjekt nach Anspruch 1, wobei
die Vorrichtung (5) für die Erhöhung des Luftwiderstands Spoiler, Landeklappen oder Hilfsruder beinhaltet, die durch ein Paar flacher Platten gebildet wird, und
der Luftwiderstand durch Öffnen beider flachen Platten während der Leistungsverbrauchssteuerung erhöht wird.

## Revendications

1. Objet volant, comprenant :
une pile à combustible (1) ;
une batterie secondaire (2) ;
un moteur (3) qui entraîner une hélice de propulsion (4) ;
un dispositif d'augmentation de résistance à l'air (5) capable d'augmenter la résistance à l'air ; et
une unité de commande,
dans lequel la pile à combustible (1), la batterie secondaire (2), et le moteur (3) sont connectés électriquement ;
le moteur (3) est entraîné en obtenant de l'énergie auprès d'au moins une de la pile à combustible (1) et de la batterie secondaire (2) ;
la batterie secondaire (2) stocke de l'énergie électrique générée par la pile à combustible (1) ; et
lorsque la pile à combustible (1) génère une quantité d'énergie dépassant une quantité de consommation d'énergie, l'unité de commande augmente une quantité d'énergie fournie au moteur (3) depuis la pile à combustible (1), et réalise une commande de consommation d'énergie pour maintenir un état de vol, dans lequel :
lorsque la pile à combustible (1) génère une quantité d'énergie dépassant une quantité de consommation d'énergie, l'unité de commande augmente une quantité d'énergie fournie au moteur (3) depuis la pile à combustible (1) tout en augmentant la résistance à l'air en actionnant le dispositif d'augmentation de résistance à l'air (5), et réalise une commande de consommation d'énergie pour maintenir un état de vol,
et en ce que, lorsque la pile à combustible (1) génère une quantité d'énergie dépassant la quantité de consommation d'énergie et une partie de la quantité d'énergie dépassant la quantité de consommation d'énergie est définie comme étant un excès de quantité d'énergie, l'unité de commande réalise la commande de consommation d'énergie lorsque l'excès de quantité d'énergie dépasse une première valeur seuil et arrête la commande de consommation d'énergie lorsque l'excès de quantité d'énergie devient inférieure à une seconde valeur seuil,
**caractérisé en ce que** :
la première valeur seuil est dans une plage de 40 % à 60 % d'une quantité de charge admissible ;
la seconde valeur seuil est dans une plage de 10 % à 20 % de la quantité de charge admissible ; et
la quantité de charge admissible est une quantité de charge dans les limites d'une plage qui ne cause pas de surcharge de la seconde batterie (2).

2. Objet volant selon la revendication 1, dans lequel
le dispositif d'augmentation de résistance à l'air (5) inclut des déporteurs, des volets, ou des compensateurs, qui est constitué par une paire de plaques plates, et
la résistance à l'air est augmentée en ouvrant les deux plaques plates durant la commande de consommation d'énergie.
